# EUROPÄISCHE PATENTSCHRIFT

(11) **EP 0 970 831 B1**
(45) Veröffentlichungstag und Bekanntmachung des Hinweises auf die Patenterteilung: **12.10.2005**
(21) Anmeldenummer: 99112534.5
(22) Anmeldetag: 01.07.1999
(51) Int. Cl.: B60H 1/00

(54) **Heizungsanlage für Kraftfahrzeuge**
Heating system for a motor vehicle
Système de chauffage pour véhicules automobiles

(30) Priorität: 07.07.1998 DE 19830274
(43) Veröffentlichungstag der Anmeldung: 12.01.2000
(73) Patentinhaber: ADAM OPEL AG, 65423 Rüsselsheim (DE)
(72) Erfinder: Jordan, Frank, Dipl.-Physiker, 65428 Rüsselsheim (DE); Sünner, Tobias, Dr.rer.nat., 65428 Rüsselsheim (DE)
(74) Vertreter: Daniel, Ulrich W.P.

(56) Entgegenhaltungen:
- DE-A- 19 735 977
- US-A- 5 330 385

## Beschreibung

Die Erfindung bezieht sich auf eine Heizungsanlage für Kraftfahrzeuge mit den im Oberbegriff des Patentanspruches 1 angegebenen Merkmalen.

Derartige Heizungsanlagen sind beispielsweise aus der DE 197 35 977 A bekannt welche den Oberbegriff von Anspruch 1 offenbart. Eine Innenraum-Heiz-, Belüftungs- und/oder Klimaeinheit und eine Sitz-Heizeinrichtung werden separat unabhängig voneinander bedient. Die Sitz-Heizeinrichtung wird manuell geschaltet oder separat von einer Steuer-/Regeleinheit geschaltet, gesteuert oder geregelt. Diese unabhängige Steuerung der Sitzheizung wurde bislang immer vorgesehen, da die Sitz-Heizungsanlage nur als Option im Fahrzeug angeordnet ist.

Auch andere bekannte Sitzheizungen werden, wie in DE-OS 41 39 580, DE-OS 41 41 224 oder DE-OS 43 18 432 beschrieben, von eigenen Einheiten angesteuert. Der Aufwand für die Herstellung und Bedienung dieser Anlagen ist hoch und es wird nur ein bedingt akzeptabler Sitz-Heizungskomfort erreicht.

Es ist Aufgabe der Erfindung, eine Heizeinrichtung der genannten Art zu schaffen, die mit geringem Aufwand herstellbar und bedienbar ist, die den Insassenkomfort verbessert und sich selbsttätig den aktuellen Bedingungen im Fahrzeug anpaßt.

Zur Lösung dieser Aufgabe zeichnet sich die Heizeinrichtung gemäß der Erfindung durch die im Patentanspruch 1 angegebenen Merkmale aus. Weitere Einzelheiten ergeben sich aus den Patentansprüchen 2 bis 4.

Eine bedeutende Abnahme des Bedienaufwandes und Zunahme des Insassenkomforts wird erreicht, wenn eine Sitz-Heizeinrichtung in einer Automatik-Betriebsart geschaltet, gesteuert oder geregelt wird und diese Steuerung/Regelung von einer vorhandenen/Steuer-/Regeleinheit der Heiz-, Belüftungs- und/oder Klimaanlage mit übernommen wird. Diese Steuer-/Regeleinheit ist üblicherweise mit Sensoren und Stellgliedern verbunden. Auf Basis der von diesen Bauelementen gewonnen Eingangsinformationen ist die Heizung, Belüftung und Klimatisierung, aber nunmehr auch die Sitzheizung automatisch zu betreiben. Es ist kein separates Steuergerät für die Sitzheizung mehr vorzusehen, sondern die Sitzheizung ist in eine komplexe Automatik-Betriebsart eingebunden.

Als Eingangsinformation werden insbesondere die Außentemperatur und die Innenraumtemperatur sowohl für die Steuerung der Innenraum- Heiz-, Belüftungs- und/oder Klimaanlage, als auch der Sitz-Heizeinrichtung herangezogen. In der Automatikbetriebsart wird also auch die Sitzheizung temperaturabhängig geschaltet, gesteuert oder geregelt, ohne daß separate Sensoren, Bus-Verbindungen oder Steuergeräte erforderlich sind. Bei zunehmender Erwärmung im Fahrzeug kann die Heizleistung der Sitzheizung parallel zu der Innenraumheizung abnehmen, ohne daß eine Bedienhandlung erforderlich ist. Bei Fahrzeugstart kann der Sitz grundsätzlich leicht angewärmt werden, um ein schnelles Wohlbefinden der Insassen zu erreichen. Ist die Klimaanlage des Fahrzeuges im Kühlbetrieb aktiv, kann ohne daß die Sitzheizung von einem Insassen abgeschaltet werden muß, dieses Abschalten automatisch erfolgen.

Von Vorteil ist, wenn die Automatik-Betriebsart der Heizungsanlage von den Insassen zusätzlich noch beeinflußt werden kann, da die Bedürfnisse bezüglich der Sitzheizung unterschiedlich sind. Dazu ist vorgesehen, daß als weitere Eingangsinformation ein Wert von einem Stufenschalter-Sitzheizung an die Steuer-/Regeleinheit der Anlage übermittelt wird. Je nach vorgewählter Stufe sind dann unterschiedliche Sitz-Heizprogramme in der Automatik Betriebsart aktiv, die zu einer automatischen, unterschiedlich starken Sitz-Beheizung führen. In jeder dieser vorgewählten Stufen (außer Stufe 0-ist gleich Aus) wird die Sitzheizung jedoch temperaturabhängig variabel angesteuert. Von Vorteil ist, daß für derartige Heizungsanlagen gegenüber dem Stand der Technik ein verringerter Herstellungsaufwand erforderlich ist, jedoch der Komfort für die Insassen bei geringem Bedienaufwand verbessert ist.

## Patentansprüche

1. Heizungsanlage für Kraftfahrzeuge mit zumindest einer Sitz-Heizeinrichtung und mit einer Innenraum-Heiz-, Belüftungs- und/oder Klimaeinheit, **dadurch gekennzeichnet, daß** zumindest in einer Automatikbetriebsart der Heiz-, Belüftungs- und/oder Klimaeinheit das Schalten, Steuern oder Regeln der Sitz-Heizeinrichtung in die Automatikbetriebsart eingebunden ist und selbsttätig von einer Steuer- bzw. Regeleinheit der Heizungs-, Belüftungs- und/oder Klimaeinheit aus erfolgt.

2. Heizungsanlage nach Anspruch 1, **dadurch gekennzeichnet, daß** die Steuer- bzw. Regeleinheit der Heiz-, Belüftungs- und/oder Klimaeinheit mit Sensoren und Stellgliedern zur Zuführung von Eingangsinformationen verbunden ist und die Sitz-Heizeinrichtung selbsttätig variabel in Abhängigkeit von diesen Eingangsinformationen schaltet, steuert oder regelt.

3. Heizungsanlage nach Anspruch 2, **dadurch gekennzeichnet, daß** als Eingangsinformationen Außentemperaturwerte und Innenraumtemperaturwerte gewonnen und als Parameter bei der automatischen Schaltung, Steuerung oder Regelung der Sitz-Heizeinrichtung benutzt werden.

4. Heizungsanlage nach einem der Ansprüche 1 - 3, **dadurch gekennzeichnet, daß** die Art und Weise der automatischen Ansteuerung der Sitz-Heizeinrichtung über ein manuell zu betätigendes Einstellelement zu beeinflussen ist.

## Claims

1. A heating system for motor vehicles having at least one seat heating arrangement and an interior heating, ventilating and/or air conditioning unit, **characterized in that**, in at least an automatic mode of operation of the heating, ventilating and/or air conditioning unit, the process of switching, controlling or regulating the seat heating arrangement is integrated into the automatic mode of operation and is effected automatically by a control or regulating unit of the heating, ventilating and/or air conditioning unit.

2. A heating system in accordance with Claim 1, **characterized in that** the control or regulating unit of the heating, ventilating and/or air conditioning unit is connected to sensors and control members for the purposes of supplying items of input information and the seat heating arrangement is switched, controlled or regulated automatically in a variable manner in dependence on these items of input information.

3. A heating system in accordance with Claim 2, **characterized in that** the items of input information obtained are in the form of the values of the outside temperature and the values of the interior temperature and are used as parameters for the process of automatically switching, controlling or regulating the seat heating arrangement.

4. A heating system in accordance with any of the Claims 1 - 3, **characterized in that** the manner in which the automatic control of the seat heating arrangement is to be carried out can be affected by a manually operable adjusting element.

## Revendications

1. Installation de chauffage pour véhicules automobiles, comprenant au moins un organe de chauffage de siège et une unité de chauffage, d'aération et/ou de climatisation de l'habitacle intérieur, **caractérisée en ce qu'**au moins dans un mode de commande automatique de l'unité de chauffage, d'aération et/ou de climatisation, la commutation, la commande ou le réglage de l'organe de chauffage de siège est intégré au mode de commande automatique et réalisé automatiquement par une unité de commande ou de réglage de l'unité de chauffage, d'aération et/ou de climatisation.

2. Installation de chauffage selon la revendication 1, **caractérisée en ce que** l'unité de commande ou de réglage de l'unité de chauffage, d'aération et/ou de climatisation est reliée à des capteurs et à des organes de réglage pour l'amenée des informations d'entrée, et commute, commande ou règle l'organe de chauffage de siège automatiquement et de façon variable en fonction de ces informations d'entrée.

3. Installation de chauffage selon la revendication 2, **caractérisée en ce que**, comme informations d'entrée sont exploitées des valeurs de température extérieure et des valeurs de température intérieure, qui sont utilisées comme paramètres par la commutation, la commande ou le réglage automatiques de l'organe de chauffage de siège.

4. Installation de chauffage selon l'une des revendications 1 à 3, **caractérisée en ce que** le mode et la sorte de commande automatique de l'organe de chauffage de siège sont influencés par un élément de réglage à actionnement manuel.
